(19) Europäisches Patentamt
European Patent Office
Office européen des brevets

(11) EP 4 245 527 A1

(12) EUROPEAN PATENT APPLICATION
published in accordance with Art. 153(4) EPC

(43) Date of publication:
**20.09.2023 Bulletin 2023/38**

(21) Application number: **21891736.7**

(22) Date of filing: **04.11.2021**

(51) International Patent Classification (IPC):
***B32B 27/00*** *(2006.01)* ***B65D 65/40*** *(2006.01)*

(52) Cooperative Patent Classification (CPC):
**B32B 27/00; B65D 65/40;** Y02W 30/80

(86) International application number:
**PCT/JP2021/040515**

(87) International publication number:
**WO 2022/102490 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.11.2020 JP 2020187124**

(71) Applicant: **DIC Corporation**
**Tokyo 174-8520 (JP)**

(72) Inventors:
- **ARAI Masamitsu**
  **Tokyo 174-8520 (JP)**
- **KOBAYASHI Hiroki**
  **Tokyo 174-8520 (JP)**
- **MURAKAMI Yoshinari**
  **Sakura-shi, Chiba 285-8668 (JP)**

(74) Representative: **Beckmann, Claus**
**Kraus & Weisert**
**Patentanwälte PartGmbB**
**Thomas-Wimmer-Ring 15**
**80539 München (DE)**

# (54) GAS BARRIER LAMINATE, AND PACKAGING MATERIAL

(57) A gas barrier laminated body having excellent recyclability as compared with the case where a packaging material is formed by using a conventional laminated body obtained by sticking different types of resin films together, and a packaging material using the laminated body are provided. The above-described problem is solved by a laminated body that includes a first base material, a second base material, and a gas barrier adhesive layer disposed between the first base material and the second base material, in which the second base material has heat-sealing properties, and the first base material and the second base material are formed from resins of the same type, and a packaging material formed by using the laminated body.

EP 4 245 527 A1

## Description

TECHNICAL FIELD

The present invention relates to a gas barrier laminated body having excellent recyclability, and a packaging material obtainable by using the gas barrier laminated body.

BACKGROUND ART

Packaging materials used for packaging of food products and daily necessities are usually formed from laminated bodies in which a heat-sealable film such as a polyethylene film or a polypropylene film and a resin film having excellent heat resistance and strength, such as a polyester film or a nylon film, are stuck together using an adhesive (PTL 1 and PTL 2). As an adhesive utilized for such laminated bodies, a two-liquid type polyurethane-based adhesive composed of a polyol and an isocyanate is known.

On the other hand, in recent years, along with the rise of a voice demanding establishment of a recycling society, attempts have been made to use recycled packaging materials. However, with regard to laminated bodies obtained by sticking together different types of resin films such as described above, it is difficult to separate each kind of resin, and the laminated bodies are not suitable for recycling.

CITATION LIST

PATENT LITERATURE

PTL 1: JP2014-004799A
PTL 2: JP2004-238050A

SUMMARY OF INVENTION

TECHNICAL PROBLEM

The invention was achieved in view of such circumstances, and it is an object of the invention to provide a gas barrier laminated body having excellent recyclability and a packaging material that uses the laminated body.

SOLUTION TO PROBLEM

The invention relates to a laminated body including a first base material, a second base material, and a gas barrier adhesive layer disposed between the first base material and the second base material, in which the second base material has heat-sealing properties, and the first base material and the second base material are formed from resins of the same type, and to a packaging material that uses the laminated body.

ADVANTAGEOUS EFFECTS OF INVENTION

According to the laminated body of the invention, a gas barrier laminated body and a packaging material, which have excellent recyclability, can be provided.

DESCRIPTION OF EMBODIMENTS

<<Laminated body>>

A laminated body of the invention includes a first base material, a second base material, and a gas barrier adhesive layer disposed between the first base material and the second base material, in which the second base material has heat-sealing properties, and the first base material and the second base material are formed from resins of the same type.

(First base material)

The first base material includes a film (1). A form in which the first base material includes a layer other than the film (1) will be described below. Regarding the film (1), any film having excellent chemical and physical strength can be used without particular limitations. Specific examples of such a film (1) include olefin resins, such as polyethylenes such as a low-density polyethylene, a medium-density polyethylene, a high-density polyethylene, and a straight-chain type (linear) low-density polyethylene, polypropylene, an ethylene-propylene copolymer, and polymethylpentene; modified olefin-based resins obtained by modifying olefin resins with acrylic acid, methacrylic acid, maleic anhydride, fumaric acid, and other unsaturated carboxylic acids; vinyl-based copolymers such as an ethylene-vinyl acetate copolymer, an ethylene-(meth)acrylic acid copolymer, an ethylene-(meth)acrylic acid ester copolymer, an ethylene-based ionomer, and polyacrylonitrile (PAN); polyester resins such as polyethylene terephthalate (PET), polylactic acid (PLA), and polybutylene succinate (PBS); amide resins such as nylon (Ny); and cellulose-based resins such as Cellophane.
The film (1) may be a film that has been subjected to any surface treatment, for example, a physical treatment such as a corona discharge treatment, an ozone treatment, a low-temperature plasma treatment using oxygen gas, nitrogen gas, or the like, or a glow discharge treatment; a chemical treatment such as an oxidation treatment using a chemical; or some other treatment.
The film (1) can be produced by subjecting the above-mentioned resin to a conventionally known film-forming method such as an extrusion method, a cast molding method, a T-die method, a cutting method, or an inflation method. The film (1) may be an unstretched film, or from the viewpoints of the strength, dimensional stability, and heat resistance of the film (1), the film (1) may be a film stretched uniaxially or biaxially by utilizing a tenter method, a tubular method, or the like.
The film (1) may include additives as necessary. Specifically, for the purpose of ameliorating and modifying processability, heat resistance, weather resistance, mechanical properties, dimensional stability, antioxidative properties, sliding properties, mold release properties, flame retardance, antifungal properties, electrical characteristics, strength, and the like, plastic compounding agents and additives such as a lubricating agent, a crosslinking agent, an oxidation inhibitor, an ultraviolet absorber, a photostabilizer, a filler, a reinforcing agent, an antistatic agent, and a pigment can be added. The amount of addition of the additives is adjusted to the extent that does not affect other performances and recyclability.
The film thickness of the film (1) is not particularly limited, and from the viewpoints of moldability and transparency, the film thickness may be appropriately selected in the range of 1 to 300 μm. The film thickness is preferably in the range of 1 to 100 μm. When the film thickness is less than 1 μm, strength is insufficient, and when the film thickness is more than 300 μm, there is a risk that rigidity may become too high and processing may be difficult.

(Second base material)

The second base material includes a film (2) and has heat-sealing properties in which films are melted by heat and mutually fused together. For the film (2), a film similar to the film (1) can be used.
The film (2) may be a stretched film that has been uniaxially or biaxially stretched, or may be an unstretched film. When the film is stretched biaxially, for example, the film is obtained by longitudinally stretching 2 to 4 times by using a roll stretching machine at 50°C to 100°C, further transversely stretching 3 to 5 times by using a tenter stretching machine in an atmosphere at 90°C to 150°C, and then heat-treating the film by using the same tenter in an atmosphere at 100°C to 240°C. Furthermore, the stretched film may be simultaneously biaxially stretched or sequentially biaxially stretched.
The film thickness of the film (2) can be arbitrarily selected; however, from the viewpoint of strength and the like as a packaging material, the film thickness is preferably set to 5 to 50 μm. The film thickness is more preferably 10 to 250 μm.
The second base material may be composed only of the film (2) when the film (2) itself has heat-sealing properties, or may have a heat seal layer formed by coating the film (2) with a heat-sealing agent including a heat-sealable resin and a solvent and drying the solvent.
Examples of the heat-sealable resin include thermoplastic resins such as shellacs, rosins, a rosin-modified maleic acid resin, a rosin-modified phenol resin, nitrocellulose, cellulose acetate, cellulose acetyl propionate, cellulose acetyl butyrate, chlorinated rubber, cyclized rubber, vinyl chloride, vinylidene chloride, a polyamide resin, a vinyl chloride-vinyl acetate copolymer, a polyester resin, a ketone resin, a butyral resin, a chlorinated polypropylene resin, a chlorinated polyethylene resin, a chlorinated ethylene vinyl acetate resin, an ethylene vinyl acetate resin, an acrylic resin, a urethane resin, an ethylene-vinyl alcohol resin, a styrene-maleic acid resin, casein, and an alkyd resin, and these may be used singly or in combination of two or more kinds thereof. From the viewpoint of recyclability, it is preferable to use a resin of the same type as the film (2); however, since recycling is possible when 95% of the total film thickness of the laminated body of the invention is composed of the same type of resins, the heat-sealable resin used for the heat-sealing agent

may be different from the film (2).

The heat-sealing agent may be in any form, such as a type in which one of these resins is dissolved in an organic solvent, a type in which one of these resins is dissolved in water or an aqueous organic solvent, or an emulsion type in which an acrylic emulsion, a urethane-based emulsion, a polyvinyl alcohol resin, an ethylene-vinyl alcohol-based emulsion, an ethylene-methacrylic acid-based emulsion, a polyolefin-based emulsion, an ethylene-vinyl acetate-based emulsion, or the like is dispersed in water or an aqueous organic solvent.

The organic solvent is not particularly limited; however, examples include various organic solvents, such as aromatic hydrocarbon-based solvents such as toluene, xylene, Solvesso #100, and Solvesso #150; aliphatic hydrocarbon-based solvents such as hexane, heptane, octane, and decane; and ester-based solvents such as methyl acetate, ethyl acetate, isopropyl acetate, butyl acetate, amyl acetate, ethyl formate, and butyl propionate.

Examples of the aqueous organic solvent include alcohol-based solvents such as methanol, ethanol, propanol, and butanol; ketone-based solvents such as acetone, methyl ethyl ketone, and cyclohexanone; and glycol ethers such as ethylene glycol (mono-, di-)methyl ether, ethylene glycol (mono-, di-)ethyl ether, ethylene glycol monopropyl ether, ethylene glycol monoisopropyl ether, monobutyl ether, diethylene glycol (mono-, di-)methyl ether, diethylene glycol (mono-, di-)ethyl ether, diethylene glycol monoisopropyl ether, diethylene glycol monobutyl ether, triethylene glycol (mono-, di-)methyl ether, propylene glycol (mono-, di-)methyl ether, propylene glycol monopropyl ether, propylene glycol monobutyl ether, and dipropylene glycol (mono-, di-)methyl ether.

The heat-sealing agent may include components other than the heat-sealable resin and the solvent. Examples of such components include a wax, a filler, an antifoaming agent, a viscosity adjusting agent, a leveling agent, a tackifier, an antiseptic agent, an antibacterial agent, an antirust agent, and an oxidation inhibitor.

As a coating method for a heat-sealing agent, any known method can be used. For example, a roll coater, a gravure coater, a flexo coater, an air doctor coater, a blade coater, an air knife coater, a squeeze coater, an impregnating coater, a transfer roll coater, a kiss coater, a curtain coater, a cast coater, a spray coater, a die coater, an offset printing machine, and a screen printing machine can be used. Furthermore, a drying step with an oven or the like may be provided after the coating.

The film thickness of the heat seal layer (amount of the heat-sealing agent applied (solid content)) may be optional, and for example, the film thickness is 0.5 g/$m^2$ to 5 g/$m^2$.

(Gas barrier adhesive layer)

A gas barrier adhesive layer is a cured coating film of a gas barrier adhesive. Incidentally, the term gas barrier adhesive according to the present specification implies that at least one of the conditions in which a coating film obtained by coating in an amount of 3 g/$m^2$ (solid content) has an oxygen barrier property of 300 cc/$m^2$/day/atm or less or a water vapor barrier property of 120 g/$m^2$/day or less at 23°C and 0% RH, is satisfied. The gas barrier adhesive that is preferably used for the invention may be a two-liquid type adhesive consisting of a polyol composition (X) including a polyester polyol (A) of at least one of the following (A1) to (A3), and a polyisocyanate composition (Y) including a compound having at least two isocyanate groups in one molecule (hereinafter, simply referred to as isocyanate compound (B)).

(1) A polyester polyol (A1) obtainable by polycondensation of a polyvalent carboxylic acid including an ortho-orienting polyvalent carboxylic acid and a polyhydric alcohol
(2) A polyester polyol (A2) having an isocyanuric ring
(3) A polyester polyol (A3) having a polymerizable carbon-carbon double bond

Examples of the ortho-orienting polyvalent carboxylic acid used for the synthesis of the polyester polyol (A1) include orthophthalic acid or acid anhydride thereof, naphthalene 2,3-dicarboxylic acid or acid anhydride thereof, naphthalene 1,2-dicarboxylic acid or acid anhydride thereof, anthraquinone 2,3-dicarboxylic acid or acid anhydride thereof, and 2,3-anthracenecarboxylic acid or acid anhydride thereof. These compounds may have a substituent at any carbon atom on the aromatic ring. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, or a naphthyl group.

The polyvalent carboxylic acid used for the synthesis of the polyester polyol (A1) may include a polyvalent carboxylic acid other than the ortho-orienting polyvalent carboxylic acid. Examples of the polyvalent carboxylic acid other than the ortho-orienting polyvalent carboxylic acid include aliphatic polyvalent carboxylic acids such as succinic acid, adipic acid, azelaic acid, sebacic acid, and dodecanedicarboxylic acid; unsaturated bond-containing polyvalent carboxylic acids such as maleic anhydride, maleic acid, and fumaric acid; alicyclic polyvalent carboxylic acids such as 1,3-cyclopentanedicarboxylic acid and 1,4-cyclohexanedicarboxylic acid; aromatic polyvalent carboxylic acids such as terephthalic

acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and acid anhydrides or ester-forming derivatives of these dicarboxylic acids, p-hydroxybenzoic acid, p-(2-hydroxyethoxy)benzoic acid, and ester-forming derivatives of these dihydroxycarboxylic acids, and one kind thereof or a combination of two or more kinds thereof can be used. Among them, succinic acid, 1,3-cyclopentanedicarboxylic acid, isophthalic acid, and acid anhydride thereof are preferred.

When the polyvalent carboxylic acid includes a polyvalent carboxylic acid other than the ortho-orienting polyvalent carboxylic acid, the proportion occupied by the ortho-orienting polyvalent carboxylic acid in the total amount of the polyvalent carboxylic acid is preferably 40% to 100% by mass.

It is preferable that the polyhydric alcohol used for the synthesis of the polyester polyol (A1) includes at least one selected from the group consisting of ethylene glycol, propylene glycol, butylene glycol, neopentyl glycol, and cyclohexanedimethanol, and it is more preferable that the polyhydric alcohol includes ethylene glycol.

Regarding the polyhydric alcohol, a polyhydric alcohol other than those described above may be used in combination, and examples include aliphatic diols such as 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol; polyhydric alcohols having a valence of 3 or more, such as glycerin, trimethylolpropane, trimethylolethane, tris(2-hydroxyethyl) isocyanurate, 1,2,4-butanetriol, pentaerythritol, and dipentaerythritol, aromatic polyhydric phenols such as hydroquinone, resorcinol, catechol, naphthalenediol, biphenol, bisphenol A, hisphenol F, tetramethylbiphenol, ethylene oxide extension products of these, and hydrogenated alicyclic compounds.

When the polyester polyol (A1) has three or more hydroxyl groups (for convenience, referred to as polyester polyol (a1)), some of the hydroxyl groups may be modified with acid groups. Such a polyester polyol is also referred to as polyester polyol (A1') in the following description. The polyester polyol (A1') is obtained by reacting the polyester polyol (a1) with a polyvalent carboxylic acid or acid anhydride thereof. The proportion of hydroxyl groups to be modified with a polyvalent carboxylic acid is preferably set to 1/3 or less of the hydroxyl groups included in the polyester polyol (a1). Examples of the polyvalent carboxylic acid used for modification include succinic anhydride, maleic acid, maleic anhydride, fumaric acid, 1,2-cyclohexanedicarboxylic acid anhydride, 4-cyclohexene-1,2-dicarboxylic acid anhydride, 5-norbomene-2,3-dicarboxylic acid anhydride, phthalic anhydride, 2,3-naphthalenedicarboxylic acid anhydride, trimellitic acid anhydride, oleic acid, and sorbic acid; however, the polyvalent carboxylic acid is not limited to these.

The polyester polyol (A2) is obtained by reacting a triol having an isocyanuric ring, a polyvalent carboxylic acid including an ortho-orienting aromatic polyvalent carboxylic acid, and a polyhydric alcohol. Examples of the triol having an isocyanuric ring include alkylene oxide adducts of isocyanuric acid, such as 1,3,5-tris(2-hydroxyethyl)isocyanuric acid and 1,3,5-tris(2-hydroxypropyl)isocyanuric acid. Regarding the ortho-orienting aromatic polyvalent carboxylic acid, polyvalent carboxylic acid, and polyhydric alcohol, the same ones as those used for the polyester polyol (A1) can be used.

As the triol compound having an isocyanuric ring, it is preferable to use 1,3,5-tris(2-hydroxyethyl)isocyanuric acid or 1,3,5-tris(2-hydroxypropyl)isocyanuric acid. As the ortho-orienting aromatic polyvalent carboxylic acid, it is preferable to use orthophthalic anhydride. As the polyhydric alcohol, it is preferable to use ethylene glycol.

The polyester polyol (A3) is obtained by using components having a polymerizable carbon-carbon double bond as the polyvalent carboxylic acid and the polyhydric alcohol.

Examples of the polyvalent carboxylic acid having a polymerizable carbon-carbon double bond include maleic anhydride, maleic acid, fumaric acid, 4-cyclohexene-1,2-dicarboxylic acid and acid anhydride thereof, 3-methyl-4-cyclohexene-1,2-dicarboxylic acid and acid anhydride thereof. Since it is presumed that as the number of carbon atoms is smaller, the molecular chain is not excessively flexible while it is difficult for oxygen to permeate, maleic anhydride, maleic acid, and fumaric acid are preferred.

Examples of the polyhydric alcohol having a polymerizable carbon-carbon double bond include 2-butene-1,4-diol.

In addition to those described above, a polyvalent carboxylic acid and a polyhydric alcohol, which do not have a polymerizable carbon-carbon double bond, may also be used in combination. Regarding such a polyvalent carboxylic acid and a polyhydric alcohol, the same ones as those used for the polyester polyols (A1) and (A2) can be used. Regarding the polyvalent carboxylic acid, it is preferable to use at least one selected from the group consisting of succinic acid, 1,3-cyclopentanedicarboxylic acid, orthophthalic acid, acid anhydride of orthophthalic acid, and isophthalic acid, and it is more preferable to use at least one of orthophthalic acid and acid anhydride thereof. Regarding the polyhydric alcohol, it is preferable to use at least one selected from the group consisting of ethylene glycol, propylene glycol, butylene glycol, neopentyl glycol, and cyclohexanedimethanol, and it is more preferable to use ethylene glycol.

The hydroxyl group value of the polyester polyol (A) is preferably 20 mg KOH/g or more and 250 mg KOH/g or less. When the hydroxyl group value is smaller than 20 mg KOH/g, the viscosity of the polyol composition (X) becomes high because the molecular weight is too large, and for example, the coating temperature in the case of applying as a solventless type adhesive needs to be increased. When the hydroxyl group value is more than 250 mg KOH/g, the crosslinking density of a cured coating film may become too high, and the adhesive strength may be decreased.

When the polyester polyol (A) has an acid group, it is preferable that the acid value is 200 mg KOH/g or less. When the acid value is more than 200 mg KOH/g, the reaction between the polyol composition (X) and the polyisocyanate composition (Y) proceeds too rapidly, and there is a risk that coating suitability may be deteriorated. The lower limit of the acid value is not particularly limited; however, for example, the lower limit is 20 mg KOH/g or more. When the acid value is 20 mg KOH/g or more, satisfactory gas barrier properties and initial cohesive strength are obtained due to an interaction between molecules. The hydroxyl group value of the polyester polyol (A) can be measured by the hydroxyl group value measurement method described in JIS-K0070, and the acid value can be measured by the acid value measurement method described in JIS-K0070.

When the number average molecular weight of the polyester polyol (A) is 300 to 5000, it is particularly preferable because a crosslinking density of the extent of having an excellent balance between adhesiveness and gas barrier properties is obtained. More preferably, the number average molecular weight is 350 to 3000. The number average molecular weight is determined by calculation from the obtained hydroxyl group value and the designed number of functional groups of the hydroxyl group.

The glass transition temperature of the polyester polyol (A) is preferably -30°C or higher and 80°C or lower, more preferably 0°C or higher and 60°C or lower, and even more preferably 25°C or higher and 60°C or lower, from the balance between the adhesiveness to the base material and the gas barrier properties.

The polyester polyol (A) may also be a polyester polyurethane polyol obtained by subjecting the polyester polyols (A1) to (A3) to urethane extension by a reaction with a diisocyanate compound to have a number average molecular weight of 1000 to 15000. Since a urethane-extended polyester polyol has a component with a molecular weight of a certain value or greater and a urethane bond, the urethane-extended polyester polyol has excellent gas barrier properties, has excellent initial cohesive strength, and is excellent as an adhesive for lamination.

The polyisocyanate composition (Y), which is one component of a two-liquid type adhesive having gas barrier properties, includes an isocyanate compound (B). As the isocyanate compound (B), conventionally known compounds can be used without particular limitation, and examples include tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, isophorone diisocyanate, or trimers of these isocyanate compounds, and adducts obtainable by reacting excess amounts of these isocyanate compounds with, for example, low-molecular weight active hydrogen compounds such as ethylene glycol, propylene glycol, meta-xylylene alcohol, 1,3-bishydroxyethylbenzene, 1,4-bishydroxyethylbenzene, trimethylolpropane, glycerol, pentaerythritol, erythritol, sorbitol, ethylenediamine, monoethanolamine, diethanolamine, triethanolamine, and meta-xylylenediamine, alkylene oxide adducts of the low-molecular weight active hydrogen compounds, high-molecular weight active hydrogen compounds such as various polyester resins, polyether polyols, and polyamides, and the like. Polyester polyisocyanates obtained by reacting the polyester polyols (A1) to (A3) with diisocyanate compounds such that the ratio of hydroxyl groups and isocyanate groups is in excess of isocyanate, may also be used. These can be used singly or in combination of two or more kinds thereof.

Furthermore, a blocked isocyanate may also be used as the isocyanate compound. Examples of the isocyanate blocking agent include phenols such as phenol, thiophenol, methylthiophenol, ethylthiophenol, cresol, xylenol, resorcinol, nitrophenol, and chlorophenol; oximes such as acetoxime, methyl ethyl keto-oxime, and cyclohexanone oxime; alcohols such as methanol, ethanol, propanol, and butanol; halogen-substituted alcohols such as ethylene chlorohydrin and 1,3-dichloro-2-propanol; tertiary alcohols such as t-butanol and t-pentanol; and lactams such as ε-caprolactam, δ-valerolactam, γ-butyrolactam, and β-propyrolactam, and other examples also include aromatic amines, imides, active methylene compounds such as acetylacetone, acetoacetic acid ester, and malonic acid ethyl ester, mercaptans, imines, ureas, diaryl compounds, and sodium bisulfite. A blocked isocyanate is obtained by subjecting the above-described isocyanate compound and an isocyanate blocking agent to an addition reaction by a known and commonly used appropriate method.

Furthermore, when a composition including a polyester polyol in which a carboxylic acid group remains as in the case of the polyester polyol (A1') is used as the polyol composition (X), the polyisocyanate composition (Y) may include an epoxy compound. Examples of the epoxy compound include diglycidyl ether of bisphenol A and an oligomer thereof, diglycidyl ether of hydrogenated bisphenol A and an oligomer thereof, ortho-phthalic acid diglycidyl ester, isophthalic acid diglycidyl ester, terephthalic acid diglycidyl ester, p-oxybenzoic acid diglycidyl ester, tetrahydrophthalic acid diglycidyl ester, hexahydrophthalic acid diglycidyl ester, succinic acid diglycidyl ester, adipic acid diglycidyl ester, sebacic acid diglycidyl ester, ethylene glycol diglycidyl ether, propylene glycol diglycidyl ether, 1,4-butanediol diglycidyl ether, 1,6-hexanediol diglycidyl ether, and polyalkylene glycol diglycidyl ethers, trimellitic acid triglycidyl ester, triglycidyl isocyanurate, 1,4-diglycidyloxybenzene, diglycidylpropylene urea, glycerol triglycidyl ether, trimethylolethane triglycidyl ether, trimethylolpropane triglycidyl ether, pentaerythritol tetraglycidyl ether, and triglycidyl ether of a glycerol alkylene oxide addition product.

In the case of using an epoxy compound, an epoxy curing accelerator known for general purpose may be appropriately added for the purpose of accelerating curing to the extent that an object of the invention is not impaired.

When a composition including a polyol having a polymerizable carbon-carbon double bond as in the case of

the polyester polyol (A3) is used as the polyol composition (X), a known polymerization catalyst can be used in combination in order to accelerate polymerization of the carbon-carbon double bond, and examples thereof include a transition metal complex. The transition metal complex is not particularly limited as long as it is a compound having an ability to oxidatively polymerize a polymerizable double bond. For example, salts of metals such as cobalt, manganese, lead, calcium, cerium, zirconium, zinc, iron, and copper, with octylic acid, naphthenic acid, neodecanoic acid, stearic acid, resin acid, tall oil fatty acid, tung oil fatty acid, linseed oil fatty acid, soybean oil fatty acid, and the like can be used. The blending amount of the transition metal complex is preferably 0 to 10 parts by mass, and more preferably 0 to 3 parts by mass, with respect to the resin solid content included in the polyol composition (X).

It is preferable that the polyol composition (X) and the polyisocyanate composition (Y) are blended such that the equivalent ratio between the hydroxyl groups included in the polyol composition (X) and the isocyanate groups included in the polyisocyanate composition (Y) is 1/0.5 to 1/10, and it is more preferable that the compositions are blended such that the equivalent ratio is 1/1 to 1/5. When the isocyanate compound (B) is in excess, there is a risk that the excess isocyanate compound remaining in a cured coating film of the adhesive may bleed out from the adhesive layer. On the other hand, when there are insufficient reactive functional groups included in the polyisocyanate composition (Y), there is a risk that the adhesive strength may be insufficient.

The gas barrier adhesive may be blended with various additives to the extent that does not impair adhesiveness and gas barrier properties. An inorganic filler may be used as such an additive. Examples of the inorganic filler include silica, alumina, aluminum flakes, and glass flakes. Particularly when a plate-shaped inorganic compound is used as the inorganic filler, it is preferable because the adhesive strength, gas barrier properties, light shielding properties, and the like are improved. Examples of the plate-shaped inorganic compound include hydrous silicates (phyllosilicate minerals and the like), kaolinite-serpentine clay minerals (halloysite, kaolinite, endellite, dickite, nacrite and the like, antigorite, chrysotile, and the like), pyrophyllite-talc group (pyrophyllite, talc, kerolite, and the like), smectite clay minerals (montmorillonite, beidellite, nontronite, saponite, hectorite, sauconite, stevensite, and the like), vermiculite clay minerals (vermiculite and the like), mica or mica clay minerals (micas such as muscovite and phlogopite, margarite, tetrasililic mica, tainiolite, and the like), chlorite group (cookeite, sudoite, clinochlore, chamosite, nimite, and the like), hydrotalcite, plate-shaped barium sulfate, boehmite, and aluminum polyphosphate. These minerals may be natural clay minerals or synthetic clay minerals. Regarding the plate-shaped inorganic compounds, one kind thereof or a combination of two or more kinds thereof can be used.

The plate-shaped inorganic compound may be an ionic compound having charges between layers or may be a nonionic compound having no charges. The presence or absence of charges between layers does not directly and significantly affect the gas barrier properties of the adhesive layer. However, an ionic plate-shaped inorganic compound and an inorganic compound having swelling properties in water have poor dispersibility in a solvent type adhesive, and when the amount of addition is increased, the inorganic compounds are thickened with the adhesive or become thixotropic, so that there is a risk that coating suitability may deteriorate. For this reason, it is preferable that the plate-shaped inorganic compound is a nonionic compound having no interlayer electrification.

The average particle size of the plate-shaped inorganic compound is not particularly limited; however, for example, the average particle size is preferably 0.1 μm or more, and more preferably 1 μm or more. When the average particle size is smaller than 0.1 μm, the detour path of oxygen molecules will not be long, and sufficient improvement in the gas barrier properties cannot be expected. The upper limit of the average particle size is not particularly limited; however, when the particle size is too large, defects such as streaks may occur on the coated surface depending on the coating method. For this reason, for example, the average particle size is preferably 100 μm or less, and preferably 20 μm or less. Furthermore, the average particle size of the plate-shaped inorganic compound according to the present specification means the particle size whose frequency of appearance is the highest when the particle size distribution of the plate-shaped inorganic compound is measured with a light scattering type measuring apparatus.

It is preferable that the aspect ratio of the plate-shaped inorganic compound is higher, in order to have improvement in the gas barrier properties by a labyrinth effect of oxygen. Specifically, the aspect ratio is preferably 3 or more, more preferably 10 or more, and most preferably 40 or more.

The blending amount of the plate-shaped inorganic compound is optional, however, for example, when the solid content total mass of the polyol composition (X), polyisocyanate composition (Y), and plate-shaped inorganic compound is taken as 100 mass, the blending amount of the plate-shaped inorganic compound is 5 to 50 parts by mass.

The gas barrier adhesive may include an adhesion promoter. Examples of the adhesion promoter include a silane coupling agent such as a hydrolyzable alkoxysilane compound, a titanate-based coupling agent, an aluminum-based coupling agent, and an epoxy resin. A silane coupling agent and a titanate-based coupling agent can be expected to have an effect of improving adhesiveness to various film materials.

When the gas barrier adhesive layer requires acid resistance, the gas barrier adhesive may include a known acid anhydride. Examples of the acid anhydride include phthalic anhydride, succinic anhydride, HET acid anhydride, hymic acid anhydride, maleic anhydride, tetrahydrophthalic anhydride, hexahydraphthalic anhydride, tetrapromphthalic anhydride, tetrachlorophthalic anhydride, trimellitic anhydride, pyromellitic anhydride, benzophenotetracarboxylic acid

anhydride, 2,3,6,7-naphthalenetetracarboxylic acid dianhydride, 5-(2,5-oxotetrahydrofuryl)-3-methyl-3-cyclohexene-1,2-dicarboxylic acid anhydride, and a styrene-maleic anhydride copolymer.

A compound having an oxygen scavenging function and the like may be further added as necessary. Examples of the compound having an oxygen scavenging function include low-molecular weight organic compounds that react with oxygen, such as hindered phenols, vitamin C, vitamin E, organic phosphorus compounds, gallic acid, and pyrogallol; and transition metal compounds of cobalt, manganese, nickel, iron, and copper.

The gas barrier adhesive may include a compound represented by the following General Formula (1) or (2):

[Chem. 1]

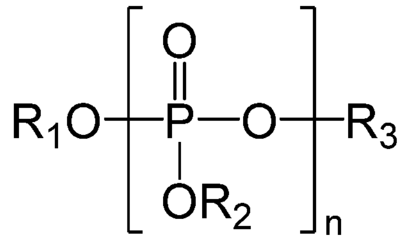

(1)

(wherein in General Formula (1), $R_1$ to $R_3$ each represent a group selected from a hydrogen atom, an alkyl group having 1 to 30 carbon atoms, a (meth)acryloyl group, a phenyl group which may have a substituent, and an alkyl group having 1 to 4 carbon atoms and having a (meth)acryloyloxy group, while at least one of them is a hydrogen atom; and n represents an integer of 1 to 4.)

[Chem. 2]

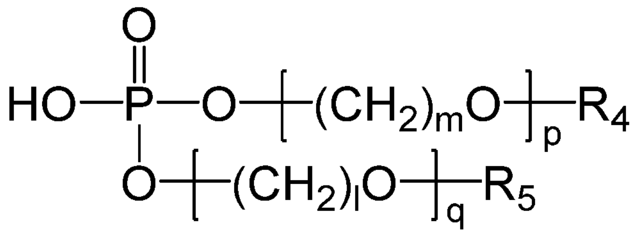

(2)

(wherein in General Formula (2), $R_4$ and $R_5$ each represent a group selected from a hydrogen atom, an alkyl group having 1 to 30 carbon atoms, a (meth)acryloyl group, a phenyl group which may have a substituent, and an alkyl group having 1 to 4 carbon atoms and having a (meth)acryloyloxy group; m and l each represent an integer of 1 to 4; p represents an integer of 0 to 30; and q represents an integer of 0 to 30; however, both p and q are not 0 at the same time.)

Specific examples of the compound represented by the above-described General Formula (1) or (2) include phosphoric acid, pyrophosphoric acid, triphosphoric acid, methyl acid phosphate, ethyl acid phosphate, butyl acid phosphate, dibutyl phosphate, 2-ethylhexyl acid phosphate, bis(2-ethylhexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphoric acid.

The blending amount of the compound represented by the above-described General Formula (1) or (2) is preferably 0.005% to 10% by mass, and more preferably 0.01% to 1% by mass, of the total solid content of the gas barrier adhesive.

In order to improve sticky adhesiveness to various film materials immediately after application, a tackifier such as a xylene resin, a terpene resin, a phenol resin, or a rosin resin may be added as necessary. The blending amount in the case of adding these is preferably in the range of 0.01 to 5 parts by mass with respect to 100 parts by mass of the total solid content of the polyol composition (X) and the polyisocyanate composition (Y).

When the polyol composition (X) includes the polyester polyol (A2), an active energy ray may be used as a method for reacting a polymerizable carbon-carbon double bond. As the active energy ray, known technologies can be used, and curing can be achieved by irradiating with ionizing radiation such as an electron beam, ultraviolet radiation, or $\gamma$-radiation. When curing is conducted using ultraviolet radiation, a known ultraviolet irradiation apparatus including a high-pressure mercury lamp, an excimer lamp, a metal halide lamp, or the like can be used.

When curing is conducted by irradiating with ultraviolet radiation, it is preferable to add a photo (polymerization)

initiator that generates radicals and the like by irradiation with ultraviolet radiation, in an amount of about 0.1 to 20 parts by mass with respect to 100 parts by mass of the polyester polyol (A2) as necessary.

Examples of a radical-generating type photo (polymerization) initiator include hydrogen-withdrawing type compounds such as benzil, benzophenone, Michler's ketone, 2-chlorothioxanthone, and 2,4-diethylthioxanthone; and photo-cleavage type compounds such as benzoin ethyl ether, diethoxyacetophenone, benzyl methyl ketal, hydroxycyclohexyl phenyl ketone, and 2-hydroxy-2-methyl phenyl ketone. Among these, the photo (polymerization) initiators can be used singly or in combination of a plurality thereof.

In addition to those, the gas barrier adhesive may include a stabilizer (an oxidation inhibitor, a thermal stabilizer, an ultraviolet absorber, or the like), a plasticizer, an antistatic agent, a lubricating agent, an antiblocking agent, a colorant, a crystal nucleating agent, and the like. These various additives may be added in advance into either one or both of the polyol composition (X) and the polyisocyanate composition (Y), or may be added when the polyol composition (X) and the polyisocyanate composition (Y) are mixed.

The gas barrier adhesive used for the invention may be either a solvent type or a solventless type. A solvent type adhesive according to the present specification refers to a form used in a method of coating a base material with the adhesive, subsequently heating the adhesive in an oven or the like to volatilize the organic solvent in the coating film, and then sticking the base material and another base material together, that is, a so-called dry lamination method. Examples of the solvent used therein include toluene, xylene, methylene chloride, tetrahydrofuran, methyl acetate, ethyl acetate, n-propyl acetate, n-butyl acetate, acetone, methyl ethyl ketone (MEK), cyclohexanone, toluol, xylylol, n-hexane, and cyclohexane. Either one or both of the polyol composition (X) and the polyisocyanate composition (Y) includes the above-mentioned organic solvents. In the case of a solvent type adhesive, the solvent used as a reaction medium during the production of the constituent components of the polyol composition (X) or the polyisocyanate composition (Y) may be further used as a diluent during painting.

A solventless type adhesive refers to a form used in a method of coating a base material with the adhesive, and then sticking the base material and another base material together without going through a step of heating the adhesive in an oven or the like to volatilize the solvent, that is, a so-called non-solvent lamination method. Neither the polyol composition (X) nor the polyisocyanate composition (Y) substantially includes the above-mentioned organic solvent. When the organic solvent used as a reaction medium during the production of the constituent components of the polyol composition (X) or the polyisocyanate composition (Y) and the raw materials therefor cannot be completely removed, and a trace amount of the organic solvent remains in the polyol composition (X) or the polyisocyanate composition (Y), it is understood that the organic solvent is substantially not included. Furthermore, when the polyol composition (X) includes a low-molecular weight alcohol, the low-molecular weight alcohol reacts with the polyisocyanate composition (Y) and becomes a part of the coating film, and therefore, it is not necessary to volatilize the low-molecular weight alcohol after coating. Therefore, such a form is also treated as a solventless type adhesive.

## <First embodiment>

A first embodiment of the invention is a product obtained by sticking the above-mentioned first base material and second base material together with a gas barrier adhesive. That is, the first embodiment has a first base material, a second base material, and a gas barrier adhesive layer that is disposed between the first base material and the second base material and is in contact with these base materials. The first base material (film (1)) and the second base material (film (2)) are formed from resins of the same type. When the film (1) is formed from an olefin resin, the film (2) is also formed from an olefin resin, and when the film (1) is formed from a polyester resin, the film (2) is also formed from a polyester resin. For example, when the film (1) is an OPP film, and the film (2) is an LLDPE film, since both are olefin resins, the films are considered to be formed from resins of the same type. When the film (1) is a PET film, and the film (2) is a PBS film, since both are polyester resins, the films are considered to be formed from the same resin.

When the gas barrier adhesive is a solvent type adhesive, the gas barrier adhesive is applied on either of the first base material or the second base material by using a roll such as a gravure roll, the organic solvent is volatilized by heating in an oven or the like, and the other is stuck thereto to obtain a laminated body of the invention. It is preferable to perform an aging treatment after lamination. The aging temperature is preferably room temperature to 80°C, and the aging time is preferably 12 to 240 hours.

When the gas barrier adhesive is a solventless type adhesive, the gas barrier adhesive that has been heated in advance to about 40°C to 100°C is applied on either one of the first base material or the second base material by using a roll such as a gravure roll, and then the other one is immediately stuck thereto to obtain a laminated body of the invention. It is preferable to perform an aging treatment after lamination. The aging temperature is preferably room temperature to 70°C, and the aging time is preferably 6 to 240 hours.

The amount of application of the gas barrier adhesive is appropriately adjusted. In the case of a solvent type, for example, the amount of application is adjusted such that the solid content is 1 $g/m^2$ or more and 10 $g/m^2$ or less, and preferably 1 $g/m^2$ or more and 5 $g/m^2$ or less. In the case of a solventless type, the amount of application of the adhesive

is, for example, 1 $g/m^2$ or more and 10 $g/m^2$ or less, and preferably 1 $g/m^2$ or more and 5 $g/m^2$ or less.

<Modification example of first embodiment>

At least one of the first base material and the second base material may include an inorganic vapor deposition layer, or a barrier coat layer may be further provided on the inorganic vapor deposition layer. When the first base material and/or second base material includes an inorganic vapor deposition layer and a barrier coat layer, these layers are disposed on the adhesive layer side.

Furthermore, the laminated body of the invention may have a printed layer provided at any position.

(Inorganic vapor deposition layer)

The inorganic vapor deposition layer is a vapor deposition layer formed from an inorganic substance or an inorganic oxide and has gas barrier properties that prevent permeation of oxygen gas and water vapor gas. Examples of the inorganic substance or inorganic oxide include aluminum, alumina, and silica, and these may be used singly, or two or more kinds thereof can be used in combination as in the case of binary vapor deposition of silica and alumina. Regarding the inorganic vapor deposition layer, two or more layers may be provided. When two or more inorganic vapor deposition layers are provided, each of the layers may have the same composition or may have different composition.

The inorganic vapor deposition layer can be provided on the first base material (film (1)) or the second base material (film (2)), directly or with any layer such as an anchor coat layer for improving the adhesiveness between the base material and the vapor deposition layer interposed therebetween, by a conventionally known method. Examples of the method for forming the inorganic vapor deposition layer include Physical Vapor Deposition methods (PVD methods) such as a vacuum vapor deposition method, a sputtering method, and an ion plating method; and Chemical Vapor Deposition methods (CVD methods) such as a plasma chemical vapor deposition method, a thermochemical vapor deposition method, and a photochemical vapor deposition method.

The film thickness of the inorganic vapor deposition layer is preferably 1 to 200 nm. When the inorganic vapor deposition layer is an aluminum vapor deposition layer, the film thickness thereof is more preferably 1 to 100 nm, even more preferably 15 to 60 nm, and still more preferably 10 to 40 nm. When the inorganic vapor deposition layer is a silica or alumina vapor deposition layer, the film thickness thereof is preferably 1 to 100 nm, more preferably 10 to 50 nm, and even more preferably 20 to 30 nm.

(Barrier coat layer)

The barrier coat layer can be provided by a conventionally known method by using a conventionally known composition. An example thereof is a film formed from a gas barrier composition such as an alkoxide hydrolysate or an alkoxide hydrolytic condensate obtainable by subjecting an alkoxide and a water-soluble polymer to polycondensation by a sol-gel method in the presence of a sol-gel method catalyst, an acid, water, and an organic solvent. The barrier coat layer may further include a silane coupling agent.

As the alkoxide, at least one alkoxide represented by General Formula $R^1{}_nM(OR^2)_m$ can be used. In the above-described formula, $R^1$ and $R^2$ each represent an organic group having 1 to 8 carbon atoms; M represents a metal atom; n represents an integer of 0 or greater; m represents an integer of 1 or greater; and n + m represents the valence of M. As the metal atom M, silicon, zirconium, titanium, aluminum, or the like can be used. Specific examples of the organic group represented by $R^1$ or $R^2$ include, for example, alkyl groups such as a methyl group, an ethyl group, an n-propyl group, an i-propyl group, an n-butyl group, and an i-butyl group. These alkyl groups in the same molecule may be identical or different. Specific examples of the alkoxide include tetramethoxysilane, tetraethoxysilane, tetrapropoxysilane, and tetrabutoxysilane.

As the water-soluble polymer, either one or both of a polyvinyl alcohol-based resin and an ethylene-vinyl alcohol copolymer can be preferably used. Regarding these resins, a commercially available resin may be used, and for example, EVAL EP-F101 (ethylene content: 32 mol%) manufactured by Kuraray Co., Ltd., SOARNOL D2908 (ethylene content: 29 mol%) manufactured by Nihon Gosei Kako Co., Ltd. and the like can be used as the ethylene-vinyl alcohol copolymer. Furthermore, RS-110 (degree of saponification = 99%, degree of polymerization = 1000) and KURARAY POVAL LM-20SO (degree of saponification = 40%, degree of polymerization = 2000) manufactured by Kuraray Co., Ltd., GOHSENOL NM-14 (degree of saponification = 99%, degree of polymerization = 1400) manufactured by Nihon Gosei Kako Co., Ltd., and the like can be used as the polyvinyl alcohol.

The content of the water-soluble polymer is, for example, 5 to 500 with respect to 100 parts by mass of the alkoxide.

As the sol-gel method catalyst, a tertiary amine is used. For example, N,N-dimethylbenzylamine, tripropylamine, tributylamine, tripentylamine, and the like can be used. Particularly, N,N-dimethylbenzylamine is preferred. For example,

it is preferable to use 0.01 to 1.0 part by mass with respect to 100 parts by mass of the total amount of the alkoxysilane and a silane coupling agent.

As the organic solvent, methyl alcohol, ethyl alcohol, n-propyl alcohol, isopropyl alcohol, n-butanol, and the like can be used.

Examples of the silane coupling agent include γ-glycidoxypropyltrimethoxysilane, γ-glycidoxypropylmethyldiethoxysilane, and (3-(3,4-epoxycyclohexyl)ethyltrimethoxysilane, and one kind thereof or a combination of two or more kinds thereof can be used. The amount of the silane coupling agent used is 1 to 20 parts by mass with respect to 100 parts by mass of the alkoxide.

The barrier coat layer is formed by coating once or a plurality of times by conventionally known methods such as roll coating using a gravure roll coater or the like, spray coating, spin coating, dipping, a brush, bar coating, and an applicator.

The film thickness of the barrier coat layer is appropriately adjusted; however, for example, the film thickness is about 0.01 to 100 μm, and more preferably 0.01 to 50 μm.

(Print layer)

The print layer is a layer on which characters, figures, symbols, and other desired patterns are printed by using liquid ink. The position at which the laminated body is provided is optional, however, an example thereof may be a position between the first base material and the adhesive layer (when an inorganic vapor deposition layer or a gas barrier coat layer is provided, between these layers and the adhesive layer). The liquid ink according to the present specification is a generic term for solvent type ink used for gravure printing or flexographic printing. The liquid ink may be an ink including a resin, a colorant, and a solvent as essential components, or may be a so-called clear ink, which includes a resin and a solvent but substantially does not include a colorant.

The resin used for the liquid ink is not particularly limited, and examples include an acrylic resin, a polyester resin, a styrene resin, a styrene-maleic acid resin, a maleic acid resin, a polyamide resin, a polyurethane resin, a vinyl chloride-vinyl acetate copolymer resin, a vinyl chloride-acrylic copolymer resin, an ethylene-vinyl acetate copolymer resin, a vinyl acetate resin, a polyvinyl chloride resin, a chlorinated polypropylene resin, a cellulose-based resin, an epoxy resin, an alkyd resin, a rosin-based resin, a rosin-modified maleic acid resin, a ketone resin, a cyclized rubber, a chlorinated rubber, butyral, and a petroleum resin, and one kind thereof or a combination of two or more kinds thereof can be used. The resin is preferably at least one kind or two or more kinds selected from a polyurethane resin, a vinyl chloride-vinyl acetate copolymer resin, and a cellulose-based resin.

Examples of the colorant used for the liquid ink include inorganic pigments such as titanium oxide, red iron oxide, antimony red, cadmium red, cadmium yellow, cobalt blue, Prussian blue, ultramarine blue, carbon black, and graphite; organic pigments such as a soluble azo pigment, an insoluble azo pigment, an azo lake pigment, a condensed azo pigment, a copper phthalocyanine pigment, and a condensed polycyclic pigment; and extender pigments such as calcium carbonate, kaolin clay, barium sulfate, aluminum hydroxide, and talc.

It is preferable that the organic solvent used for the liquid ink does not include an aromatic hydrocarbon-based organic solvent. More specifically, examples include alcohol-based organic solvents such as methanol, ethanol, n-propanol, isopropanol, and butanol; ketone-based organic solvents such as acetone, methyl ethyl ketone, and methyl isobutyl ketone; ester-based organic solvents such as methyl acetate, ethyl acetate, propyl acetate, and butyl acetate; aliphatic hydrocarbon-based organic solvents such as n-hexane, n-heptane, and n-octane; and alicyclic hydrocarbon-based organic solvents such as cyclohexane, methylcyclohexane, ethylcyclohexane, cycloheptane, and cyclooctane, and one kind thereof or a combination of two or more kinds thereof can be used.

<Second embodiment>

A second embodiment of the invention includes a third base material in addition to the above-mentioned first base material and second base material. The third base material is such that an inorganic vapor deposition layer is provided on a film (3) similar to the above-mentioned film (1). The inorganic vapor deposition layer is similar to that of the first embodiment. The third base material is disposed between the first base material and the second base material, and at least one of an adhesive layer that adheres the first base material and the third base material together and an adhesive layer that adheres the second base material and the third base material together is a cured coating film of the above-described gas barrier adhesive. It is preferable to use a gas barrier adhesive as the adhesive to be in contact with the inorganic vapor deposition layer.

The other adhesive layer may be an above-mentioned gas barrier adhesive or may be a general-purpose adhesive for lamination that does not have gas barrier properties. An example of such an adhesive for lamination can be a two-liquid curable type adhesive including a polyol composition and a polyisocyanate composition, and both a solvent type and a solventless type can be preferably used.

When the adhesive (a gas barrier adhesive and a general-purpose adhesive for lamination used as necessary) is a solvent type, the laminated body according to the second embodiment is obtained, for example, as follows. First, the adhesive is applied on either the first base material or the third base material by using a roll such as a gravure roll, the adhesive is heated in an oven or the like to volatilize the organic solvent, and then the other base material is stuck thereto. Subsequently, the adhesive is applied in the same manner as described above on at least one of the second base material or the third base material, the solvent is volatilized, and the other base material is stuck thereto. After lamination, it is preferable to perform an aging treatment. The aging temperature and the amount of application of the adhesive are similar to those of the first embodiment.

When the adhesive (a gas barrier adhesive and a general-purpose adhesive for lamination used as necessary) is a solventless type, the laminated body according to the second embodiment is obtained, for example, as follows. First, the adhesive that has been held in advance at about 40°C to 100°C is applied on either of the first base material or the third base material by using a roll such as a gravure roll, subsequently the other base material is immediately stuck thereto, and an aging treatment is performed. After the aging treatment, the adhesive is applied in the same manner as described above on at least one of the second base material or the third base material, and the other base material is stuck thereto. It is preferable to perform an aging treatment again after lamination. The aging temperature and the amount of application of the adhesive are similar to those of the first embodiment.

Also in the second embodiment, the first base material and the second base material may include an inorganic vapor deposition layer and a gas barrier coat layer similarly to the modification example of the first embodiment, or a print layer may be provided at any position of the laminated body. The inorganic vapor deposition layer, the gas barrier coat layer, and the print layer can be provided in the same manner as in the modification example of the first embodiment.

<<Packaging material>>

The laminated body of the invention can be used as a multilayer packaging material intended for protecting food products, pharmaceutical products, and the like. When the laminated body is used as a multilayer packaging material, the layer configuration thereof may change according to the content, the environment of usage, and the form of usage.

The packaging material of the invention is obtained by, for example, superposing the laminated bodies of the invention such that the heat seal layers face each other, and then heat-sealing the peripheral edges thereof. As a bag-making method, a method of folding or superposing the laminated body of the invention to arrange the surfaces of the inner layers (surfaces of the sealant films) thereof to face each other, and heat-sealing the peripheral edges in the form of, for example, a side surface sealing type, a two-side sealing type, a three-side sealing type, a four-side sealing type, an envelope sealing type, a palm-joint sealing type, a pleated sealing type, a flat-bottom sealing type, a square-bottom sealing type, a gusset type, and other heat-sealing types. The packaging material of the invention can adopt various forms according to the content, the environment of usage, and the form of usage. A self-supporting packaging material (standing pouch) and the like are also possible. Regarding the method for heat-sealing, heat-sealing can be carried out by known methods such as bar sealing, rotary roll sealing, belt sealing, impulse sealing, high-frequency sealing, and ultrasonic sealing.

A product using the packaging material of the invention is produced by charging the content into the packaging material of the invention through an opening part of the packaging material and then heat-sealing the opening part. Examples of the content to be charged include confectioneries such as rice crackers, bean confectionery, nuts, biscuits, cookies, wafer confectionery, marshmallows, pies, half-baked cakes, candies, and snack confectionery; staples such as bread, snack noodles, instant noodles, dried noodles, pasta, aseptically packaged rice, rice gruel, rice porridge, packaged rice cakes, and cereal foods; agricultural processed products such as pickles, boiled beans, natto, soybean paste, frozen tofu, tofu, nameko mushroom, konjac, processed wild vegetables, jams, peanut cream, salads, frozen vegetables, and processed potatoes; processed meat products such as hams, bacon, sausages, processed chicken products, and corned beef; processed fishery products such as fish hams and sausages, fish paste products, kamaboko, laver, preserved seafood boiled in soy sauce, bonito flakes, shiokara, smoked salmon, and salted cod roe; fruits such as peaches, mandarin oranges, pineapples, apples, pears, and cherries; vegetables such as corn, asparagus, mushrooms, onions, carrots, radishes, and potatoes; cooked foods such as frozen daily dishes and chilled daily dishes represented by hamburgers, meat balls, fried seafoods, dumplings, and croquettes; dairy products such as butter, margarine, cheese, cream, instant creamy powders, and formulated milk powders for infants; and food products such as liquid seasonings, retort curry, and pet foods. Furthermore, the packaging material of the invention can also be used as a packaging material for cigarettes, disposable body warmers, pharmaceutical products such as infusion packs, cosmetics, and vacuum insulation materials.

Furthermore, a laminated body composed only of low-polarity films such as an olefin-based film is usually considerably inferior in aroma retention properties as compared with a laminated body using polar films such as a PET film. In contrast, the laminated body of the invention has excellent aroma retention properties even when the first base

material, the second base material, and the optionally used third base material all include an olefin-based film such as polyethylene or polypropylene, specifically with configurations such as OPP/gas barrier adhesive layer/CPP, OPP/gas barrier adhesive layer/VM-CPP, OPE/gas barrier adhesive layer/VMPE, and OPP/gas barrier adhesive layer/VM-OPP/(gas barrier) adhesive layer/CPP.

Therefore, the packaging material can also be suitably used as a packaging material for contents that require aroma retention properties, such as cocoa, soy sauce, sauces, soybean paste, curry, coffee, green tea, black tea, limonene, methyl salicylate, menthol, cheese, flavorings; sanitary goods including fragrance components, such as shampoos, conditioners, detergents, softeners, and soaps; pet foods, insect repellents, fragrances, hair dyes, perfumes, and agrochemicals.

EXAMPLES

Hereinafter, the invention will be described by way of Examples and Comparative Examples; however, the invention is not intended to be limited to these. Blending compositions and other numerical values are on a mass basis, unless particularly stated otherwise.

<Preparation of adhesive>

(Preparation of gas barrier adhesive 1)

(Polyol composition X1)

Into a polyester reaction vessel equipped with a stirrer, a nitrogen gas inlet tube, a Snyder column, and a condenser, 80.12 parts of ethylene glycol, 148.12 parts of phthalic anhydride, and 0.02 parts of titanium tetraisopropoxide were introduced, and the mixture was gradually heated such that the upper part temperature of the rectifying column did not exceed 100°C, to maintain the internal temperature at 220°C. The esterification reaction was completed when the acid value reached 1 mg KOH/g or less, and a polyester polyol having a number average molecular weight of 900 was obtained. The hydroxyl group value was 124.7. 310.13 parts of ethyl acetate as a diluting solvent and 0.06 parts of phosphoric acid were introduced therein while the system was further heated to 60°C, the mixture was stirred for 1 hour, and polyol composition X1 was obtained.

(Polyisocyanate composition Y1)

Into a polyester reaction vessel equipped with a stirrer, a nitrogen gas inlet tube, a Snyder column, and a condenser, 92.00 parts of ethylene glycol, 118.50 parts of phthalic anhydride, 29.23 parts of adipic acid, and 0.01 parts of titanium tetraisopropoxide were introduced, the mixture was gradually heated such that the upper part temperature of the rectifying column did not exceed 100°C, to maintain the internal temperature at 220°C. The esterification reaction was completed when the acid value reached 1 mg KOH/g or less, 0.03 parts of phosphoric acid was introduced therein while the system was further heated to 60°C, the mixture was stirred for 1 hour, and a polyester intermediate B1' having a number average molecular weight of 500 was obtained.

Into a reaction vessel equipped with a stirrer, a nitrogen gas inlet tube, a Snyder column, a cooling condenser, and a dropping funnel, 71.45 parts of xylylene diisocyanate and 46.26 parts of MILLIONATE MN (mixture of 4,4'-diphenylmethane diisocyanate and 2,4'-diphenylmethane diisocyanate) were introduced, the mixture was stirred while being heated to 70°C, 92.28 parts of the polyester intermediate B1' was added dropwise thereto for 2 hours by using the dropping funnel, the mixture was stirred for another 4 hours, and polyisocyanate composition Y1 was obtained. The NCO% measured according to JIS-K1603 was 15.1%.

100 parts of polyol composition X1 and 40 parts of polyisocyanate composition Y1 were mixed to obtain gas barrier adhesive 1.

(Preparation of gas barrier adhesive 2)

(Polyol composition X2)

Into a polyester reaction vessel equipped with a stirrer, a nitrogen gas inlet tube, a Snyder column, and a condenser, 79.10 parts of ethylene glycol, 74.06 parts of phthalic anhydride, 73.07 parts of adipic acid, and 0.01 parts of titanium tetraisopropoxide were introduced, the mixture was gradually heated such that the upper part temperature of the rectifying column did not exceed 100°C, to maintain the internal temperature at 220°C. The esterification reaction was completed when the acid value reached 1 mg KOH/g or less, 0.03 parts of phosphoric acid was introduced therein

while the system was further heated to 60°C, the mixture was stirred for 1 hour, and a polyester polyol having a number average molecular weight of 800 was obtained. The hydroxyl group value was 143.2 mg KOH/g. The obtained polyester polyol was used as polyol composition X2.

(Polyisocyanate composition Y2)

Into a polyester reaction vessel equipped with a stirrer, a nitrogen gas inlet tube, a Snyder column, and a condenser, 79.27 parts of ethylene glycol, 59.25 parts of phthalic anhydride, 87.68 parts of adipic acid, and 0.02 parts of titanium tetraisopropoxide were introduced, the mixture was gradually heated such that the upper part temperature of the rectifying column did not exceed 100°C, to maintain the internal temperature at 220°C. The esterification reaction was completed when the acid value reached 1 mg KOH/g or less, 0.06 parts of phosphoric acid was introduced therein while the system was further heated to 60°C, the mixture was stirred for 1 hour, and a polyester intermediate B2' having a number average molecular weight of 850 was obtained.

Into a reaction vessel equipped with a stirrer, a nitrogen gas inlet tube, a Snyder column, a cooling condenser, and a dropping funnel, 69.06 parts of xylylene diisocyanate and 30.61 parts of MILLIONATE MN (mixture of 4,4'-diphenylmethane diisocyanate and 2,4'-diphenylmethane diisocyanate) were introduced, the mixture was stirred while being heated to 70°C, 100.33 parts of the polyester intermediate B2' was added dropwise thereto for 2 hours by using the dropping funnel, the mixture was stirred for another 4 hours, and polyisocyanate composition Y2 was obtained. The NCO% measured according to JIS-K1603 was 15.4%.

50 parts of polyol composition X2 and 100 parts of polyisocyanate composition Y2 were mixed to obtain gas barrier adhesive 2.

(Preparation of non-gas barrier adhesive 3)

(Polyol composition X')

Into a reaction vessel equipped with a stirrer, a nitrogen gas inlet tube, a Snyder column, a cooling condenser, and a dropping funnel, 73.98 parts of castor oil and 51.02 parts of polypropylene glycol (molecular weight about 4000) were introduced, the mixture was stirred while being heated to 70°C, 2.55 parts of MILLIONATE MN (mixture of 4,4'-diphenylmethane diisocyanate and 2,4'-diphenylmethane diisocyanate) was added dropwise thereto by using the dropping funnel, the mixture was stirred for another 4 hours, and polyol composition X' was obtained. The hydroxyl group value was 115.0 mg KOH/g.

(Polyisocyanate composition Y')

Into a reaction vessel equipped with a stirrer, a nitrogen gas inlet tube, a Snyder column, a cooling condenser, and a dropping funnel, 114.00 parts of MILLIONATE MN (mixture of 4,4'-diphenylmethane diisocyanate and 2,4'-diphenylmethane diisocyanate) was introduced, the mixture was stirred while being heated to 70°C, 28.16 parts of polypropylene glycol (molecular weight about 400) and 58.44 parts of polypropylene glycol (molecular weight about 1000) were added dropwise thereto for 2 hours by using the dropping funnel, the mixture was stirred for another 4 hours, and polyisocyanate composition Y' was obtained. The NCO% measured according to JIS-K1603 was 13.5%.

50 parts of polyol composition X' and 100 parts of polyisocyanate composition Y' were mixed to obtain non-gas barrier adhesive 3.

<Production of laminated body>

(Configuration Example 1)

The adhesive 1 was applied on a first base material (OPP film) by using a bar coater such that the amount of coating film was 3.0 g/$m^2$ (solid content), and the diluting solvent was volatilized with a dryer set at a temperature of 70°C to form an adhesive layer. A second base material (CPP film) was stuck thereto, with the adhesive layer interposed therebetween, subsequently aging was performed at 40°C for 2 days, and a laminated body of Example (1-1) was obtained.

The adhesive 2 was applied on a first base material (OPP film) by using a solventless test coater such that the amount of application was 2.4 g/$m^2$ to form an adhesive layer, next a second base material (CPP film) was stuck thereto, with the adhesive layer interposed therebetween, subsequently aging was performed at 40°C for 2 days, and a laminated body of Example (2-1) was obtained.

A laminated body of Comparative Example (1-1) was obtained in the same manner as described above, except

that the adhesive 3 was used instead of the adhesive 2.

(Configuration Example 6)

A pattern was printed on a first base material (OPP film) with a printing ink ("FINART F407B medium yellow and R794 white" manufactured by DIC Corporation), and then the printing ink was dried with a dryer to form a print layer. Next, the adhesive 1 was applied on the print layer by using a bar coater such that the amount of coating film was 3.0 $g/m^2$ (solid content), the diluting solvent was volatilized with a dryer set to a temperature of 70°C to form an adhesive layer. A second base material (CPP film) was stuck thereto, with the adhesive layer interposed therebetween, subsequently aging was performed at 40°C for 2 days, and a laminated body of Example (1-6) was obtained.
A print layer was formed in the same manner as described above on a first base material (OPP film), subsequently the adhesive 2 was applied thereon by using a solventless test coater such that the amount of application was 2.4 $g/m^2$ to form an adhesive layer, next a second base material (CPP film) was stuck thereto, with the adhesive layer interposed therebetween, subsequently aging was performed at 40°C for 2 days, and a laminated body of Example (2-6) was obtained.
A laminated body of Comparative Example (1-6) was obtained in the same manner as described above, except that the adhesive 3 was used instead of the adhesive 2.

(Configuration Example 12)

The adhesive 1 was applied on a first base material (OPP film) by using a bar coater such that the amount of coating film was 3.0 $g/m^2$ (solid content), the diluting solvent was volatilized with a dryer set at a temperature of 70°C to form an adhesive layer, and then a third base material (VM-OPP film) was stuck thereto, with the adhesive layer interposed therebetween. Next, the adhesive 1 was applied in the same manner as described above on the third base material, the solvent was volatilized to form an adhesive layer, and a second base material (CPP film) was stuck thereto, with the adhesive layer interposed therebetween. Aging was performed at 40°C for 2 days, and a laminated body of Example (1-12) was obtained.
The adhesive 2 was applied on a first base material (OPP film) by using a solventless test coater such that the amount of application was 2.4 $g/m^2$ to form an adhesive layer, next a third base material (VM-OPP film) was stuck thereto, with the adhesive layer interposed therebetween, subsequently aging was performed at 40°C for 2 days. Next, the adhesive 2 was applied in the same manner as described above on the third base material, a second base material (CPP film) was stuck thereto, subsequently aging was performed at 40°C for 2 days, and a laminated body of Example (2-12) was obtained.
A laminated body of Comparative Example (1-12) was obtained in the same manner as described above, except that the adhesive 3 was used instead of the adhesive 2.

(Configuration Example 38)

A print layer was formed in the same manner as in Configuration Example 6 on a first base material (OPP film). Next, the adhesive 1 was applied on the print layer by using a bar coater such that the amount of coating film was 3.0 $g/m^2$ (solid content), the diluting solvent was volatilized with a dryer set at a temperature of 70°C to form an adhesive layer, and then a third base material (VM-OPP film) was stuck thereto, with the adhesive layer interposed therebetween. Next, the adhesive 1 was applied in the same manner as described above on the third base material, the solvent was volatilized to form an adhesive layer, and a second base material (CPP film) was stuck thereto, with the adhesive layer interposed therebetween. Aging was performed at 40°C for 2 days, and a laminated body of Example (1-38) was obtained.
A print layer was formed in the same manner as in Configuration Example 6 on a first base material (OPP film). Next, the adhesive 2 was applied on the print layer by using a solventless test coater such that the amount of application was 2.4 $g/m^2$ to form an adhesive layer, a third base material (VM-OPP film) was stuck thereto, with the adhesive layer interposed therebetween, and then aging was performed at 40°C for 2 days. Next, the adhesive 2 was applied in the same manner as described above on the third base material, a second base material (CPP film) was stuck thereto, subsequently aging was performed at 40°C for 2 days, and a laminated body of Example (2-38) was obtained.
A laminated body of Comparative Example (1-38) was obtained in the same manner as described above, except that the adhesive 3 was used instead of the adhesive 2.

(Configuration Examples 2 to 5, 9 to 11, 20 to 22, and 50 to 60)

Laminated bodies of Examples and Comparative Examples were obtained in the same manner as in Configuration Example 1, except that the first base material and the second base material were changed as indicated in Tables

2 to 7.

(Configuration Examples 7, 8, and 35 to 37)

Laminated bodies of Examples and Comparative Examples were obtained in the same manner as in Configuration Example 6, except that the first base material and the second base material were changed as indicated in Tables 2 to 7.

(Configuration Examples 13 to 19 and 23 to 34)

Laminated bodies of Examples and Comparative Examples were obtained in the same manner as in Configuration Example 12, except that the first base material, the second base material, and the third base material were changed as indicated in Tables 3 to 7.

(Configuration Examples 39 to 49)

Laminated bodies of Examples and Comparative Examples were obtained in the same manner as in Configuration Example 38, except that the first base material, the second base material, and the third base material were changed as indicated in Tables 3 to 7.

Furthermore, in the tables, those described on the left-hand side are the first base materials, those described on the right-hand side are the second base materials, and those described in the middle are the third base materials. In the tables, description of the adhesive layer is omitted. The description of the third base material as VM-OPP in Configuration Example 12 means that the inorganic vapor deposition layer is located on the first base material side, and the description of the third base material as OPP-VM in Configuration Example 13 means that the inorganic vapor deposition layer is located on the second base material side. This also applies in the same manner for the description of other configurations, the first base material, and the second base material. In the description of Examples and Comparative Examples, the front numbers represent the adhesives, and the back numbers represent the Configuration Examples. For example, Example (1-12) is a laminated body of Configuration Example 12 produced using the adhesive 1, Example (2-20) is a laminated body of Configuration Example 20 produced using the adhesive 2, and Comparative Example (1-31) is a laminated body of Configuration Example 31 produced using the adhesive 3.

The films used for the production of Configuration Examples 1 to 60 are as follows.

(CPP)
Unstretched polypropylene film having a film thickness of 25 μm
(VM-CPP)
Film obtained by providing an aluminum vapor deposition layer (40 μm) on a CPP film
(OPP)
Biaxially stretched polypropylene film having a film thickness of 25 μm
(VM-OPP)
Film obtained by providing an aluminum vapor deposition layer (40 μm) on an OPP film
(VM-OPP (HS))
Film obtained by applying a heat-sealing agent (film thickness 0.5 μm) on a VM-OPP film
(AlOx-OPP)
Film obtained by providing a vapor deposition layer (20 μm) of aluminum oxide on an OPP film
(SiOx-OPP)
Film obtained by providing a vapor deposition layer (20 μm) of silica on an OPP film
(PE)
Unstretched low-density polyethylene film having a film thickness of 40 μm
(VM-PE)
Film obtained by providing an aluminum vapor deposition layer (40 μm) on a PE film
(OPE)
Biaxially stretched polyethylene film having a film thickness of 30 μm
(AlOx-OPE)
Film obtained by providing a vapor deposition layer (20 μm) of aluminum oxide on an OPP film
(SiOx-OPE)
Film obtained by providing a vapor deposition layer (20 μm) of silica on an OPP film
(PET)
Biaxially stretched polyethylene terephthalate film having a film thickness of 12 μm

(PET (HS))
Film obtained by applying a heat-sealing agent (film thickness 0.5 μm) on a PET film
(VM-PET)
Film obtained by providing an aluminum vapor deposition layer (40 μm) on a PET film
(AlOx-PET)
Film obtained by providing a vapor deposition layer (20 μm) of aluminum oxide on a PET film
(AlOx-PET (HS))
Film obtained by applying a heat-sealing agent (film thickness 0.5 μm) on an AlOx-PET film
(SiOx-PET)
Film obtained by providing a vapor deposition layer (20 μm) of silica on a PET film
(SiOx-PET (HS))
Film obtained by applying a heat-sealing agent (film thickness 0.5 μm) on a SiOx-PET film

<Evaluation>

(Oxygen transmission rate (OTR))

Each laminated body after completion of aging was adjusted to a size of 10 cm × 10 cm, and the oxygen transmission rate (unit is cc/m$^2$·day·atm) was measured in an atmosphere of 23°C and 0% RH according to JIS-K7126 (isopiestic method) using OX-TRAN 2/21 (manufactured by Mocon Corporation: oxygen transmission rate measuring apparatus). RH represents humidity. The laminated body was evaluated according to the following five grades, based on the proportion of the oxygen transmission rate of the obtained laminated body with respect to the oxygen transmission rate calculated from a combination of the films used for the production of the laminated body, and the results are summarized in Tables 2 to 7.

5: Less than 20% of the calculated acid transmission rate
4: 20% or more and less than 40% of the calculated oxygen transmission rate
3: 40% or more and less than 60% of the calculated oxygen transmission rate
2: 60% or more and less than 80% of the calculated oxygen transmission rate
1: 80% or more of the calculated oxygen transmission rate

(Aroma retention properties)

The laminated bodies of the Configuration Examples shown in Table 8 were each stuck together by using the adhesives 1, 2, and 3, and various laminated bodies after completion of aging were cut into a size of 9 cm ×10 cm. The longer side of a film was folded in half, two sides were heat-sealed at 160°C for one second, subsequently 5 g of coffee beans (GOLD SPECIAL manufactured by UCC, special blend powder type) were charged therein, the remaining one side was heat-sealed to tightly seal the coffee beans in a three-side sealing type. This envelope was immediately introduced into a mayonnaise bottle (M-70) manufactured by HAKUYO GLASS Co., Ltd., tightly sealed, and stored for 3 days at a temperature of 40°C and a relative humidity of 60%. Sensory evaluation was carried out by five panelists, evaluation was conducted in four grades according to the following evaluation criteria, and the results are summarized in Table 8.

A: No panelists feel the smell.
B: One panelist feels the smell.
C: Two or three panelists feel the smell.
D: Four or more panelists feel the smell.

Furthermore, the oxygen transmission rate ($OTR_{(c)}$) calculated from the combination of films used for the production of each laminated body can be determined by the following Formula (3). In the following Formula (3), $OTR_{(1)}$ to $OTR_{(3)}$ represent the oxygen transmission rates of the first base material, the second base material, and the third base material, respectively. The oxygen transmission rates at 23°C and 0% RH of the films used for the production of the laminated bodies are as shown in Table 1.
[Math. 1]

$$OTR_{(c)} = \frac{1}{\frac{1}{OTR_{(1)}} + \frac{1}{OTR_{(2)}} + \frac{1}{OTR_{(3)}}} \quad (3)$$

[Table 1]

| | Oxygen transmission rate |
|---|---|
| CPP | 3922 |
| VM-CPP | 30 |
| OPP | 1470 |
| VM-OPP | 50 |
| VM-OPP (HS) | 50 |
| AlOx-OPP | 2 |
| SiOx-OPP | 2 |
| PE | 6129 |
| VM-PE | 100 |
| OPE | 2000 |
| AlOx-OPE | 3 |
| SiOx-OPE | 3 |
| PET | 118 |
| PET (HS) | 118 |
| VM-PET | 1 |
| AlOx-PET | 0.5 |
| AlOx-PET (HS) | 0.5 |
| SiOx-PET | 0.5 |
| SiOx-PET (HS) | 0.5 |

[Table 2]

| | | Oxygen transmission rate | | |
|---|---|---|---|---|
| | | Example (1-1) to (1-10) | Example (2-1) to (2-10) | Comparative Example (1-1) to (1-10) |
| Configuration Example 1 | OPP/CPP | 5 | 4 | 1 |
| Configuration Example 2 | OPP/PE | 5 | 4 | 1 |
| Configuration Example 3 | OPE/CPP | 5 | 4 | 1 |
| Configuration Example 4 | OPE/PE | 5 | 4 | 1 |
| Configuration Example 5 | PET/PET(HS) | 2 | 1 | 1 |

(continued)

| | | Oxygen transmission rate | | |
|---|---|---|---|---|
| | | Example (1-1) to (1-10) | Example (2-1) to (2-10) | Comparative Example (1-1) to (1-10) |
| Configuration Example 6 | OPP/ Print layer /CPP | 5 | 4 | 1 |
| Configuration Example 7 | OPP/ Print layer /PE | 5 | 4 | 1 |
| Configuration Example 8 | PET/ Print layer /PET (HS) | 2 | 1 | 1 |
| Configuration Example 9 | OPP/VM-CPP | 5 | 5 | 2 |
| Configuration Example 10 | OPP/VM-PE | 5 | 5 | 2 |

[Table 3]

| | | Oxygen transmission rate | | |
|---|---|---|---|---|
| | | Example (1-11) to (1-20) | Example (2-11) to (2-20) | Comparative Example (1-11) to (1-20) |
| Configuration Example 11 | OPP/VM-OPP(HS) | 5 | 5 | 2 |
| Configuration Example 12 | OPP/VM-OPP/CPP | 5 | 5 | 2 |
| Configuration Example 13 | OPP/OPP-VM/CPP | 5 | 5 | 2 |
| Configuration Example 14 | OPP/VM-OPP/PE | 5 | 5 | 2 |
| Configuration Example 15 | OPP/OPP-VM/PE | 5 | 5 | 2 |
| Configuration Example 16 | OPP/VM-CPP/CPP | 5 | 5 | 2 |
| Configuration Example 17 | OPP/CPP-VM/CPP | 5 | 5 | 2 |
| Configuration Example 18 | OPP/VM-CPP/PE | 5 | 5 | 2 |
| Configuration Example 19 | OPP/CPP-VM/PE | 5 | 5 | 2 |
| Configuration Example 20 | OPE/VM-CPP | 5 | 5 | 2 |

[Table 4]

| | | Oxygen transmission rate | | |
|---|---|---|---|---|
| | | Example (1-21) to (1-30) | Example (2-21) to (2-30) | Comparative Example (1-21) to (1-30) |
| Configuration Example 21 | OPE/VM-PE | 5 | 5 | 2 |
| Configuration Example 22 | OPE/VM-OPP(HS) | 5 | 5 | 2 |
| Configuration Example 23 | OPE/VM-OPP/CPP | 5 | 5 | 2 |
| Configuration Example 24 | OPE/OPP-VM/CPP | 5 | 5 | 2 |
| Configuration Example 25 | OPE/VM-OPP/PE | 5 | 5 | 2 |
| Configuration Example 26 | OPE/OPP-VM/CPP | 5 | 5 | 2 |
| Configuration Example 27 | OPE/VM-CPP/CPP | 5 | 5 | 2 |
| Configuration Example 28 | OPE/CPP-VM/CPP | 5 | 5 | 2 |
| Configuration Example 29 | OPE/VM-CPP/PE | 5 | 5 | 2 |
| Configuration Example 30 | OPE/CPP-VM/PE | 5 | 5 | 2 |

[Table 5]

| | | Oxygen transmission rate | | |
|---|---|---|---|---|
| | | Example (1-31) to (1-40) | Example (2-31) to (2-40) | Comparative Example (1-31) to (1-40) |
| Configuration Example 31 | PET/VM-PET/PET(HS) | 5 | 3 | 1 |
| Configuration Example 32 | PET/VM-PET/AlOx-PET(HS) | 5 | 4 | 1 |
| Configuration Example 33 | PET/PET-VM/PET(HS) | 5 | 4 | 1 |
| Configuration Example 34 | PET/PET-VM/AlOx-PET(HS) | 5 | 4 | 1 |
| Configuration Example 35 | OPP/Print layer/VM-CPP | 5 | 5 | 2 |
| Configuration Example 36 | OPP/Print layer/VM-PE | 5 | 5 | 2 |
| Configuration Example 37 | OPP/Print layer/VM-OPP(HS) | 5 | 5 | 2 |
| Configuration Example 38 | OPP/Print layer/VM-OPP/CPP | 5 | 5 | 2 |

(continued)

| | | Oxygen transmission rate | | |
|---|---|---|---|---|
| | | Example (1-31) to (1-40) | Example (2-31) to (2-40) | Comparative Example (1-31) to (1-40) |
| Configuration Example 39 | OPP/Print layer/OPP-VM/CPP | 5 | 5 | 2 |
| Configuration Example 40 | OPP/Print layer/VM-OPP/PE | 5 | 5 | 2 |

[Table 6]

| | | Oxygen transmission rate | | |
|---|---|---|---|---|
| | | Example (1-41) to (1-50) | Example (2-41) to (2-50) | Comparative Example (1-41) to (1-50) |
| Configuration Example 41 | OPP/Print layer/OPP-VM/CPP | 5 | 5 | 2 |
| Configuration Example 42 | OPP/Print layer/VM-CPP/CPP | 5 | 5 | 2 |
| Configuration Example 43 | OPP/Print layer/CPP-VM/CPP | 5 | 5 | 2 |
| Configuration Example 44 | OPP/Print layer/VM-CPP/PE | 5 | 5 | 2 |
| Configuration Example 45 | OPP/Print layer/CPP-VM/PE | 5 | 5 | 2 |
| Configuration Example 46 | PET/Print layer/VM-PET/PET(HS) | 5 | 3 | 1 |
| Configuration Example 47 | PET/Print layer/VM-PET/AlOx-PET(HS) | 5 | 4 | 1 |
| Configuration Example 48 | PET/Print layer/PET-VM/PET(HS) | 5 | 4 | 1 |
| Configuration Example 49 | PET/Print layer/PET-VM/AlOx-PET(HS) | 5 | 4 | 1 |
| Configuration Example 50 | OPP-AlOx/CPP | 5 | 4 | 1 |

[Table 7]

| | | Oxygen transmission rate | | |
|---|---|---|---|---|
| | | Example (1-51) to (1-60) | Example (2-51) to (2-60) | Comparative Example (1-51) to (1-60) |
| Configuration Example 51 | OPP-SiOx/CPP | 5 | 4 | 1 |
| Configuration Example 52 | OPP-AlOx/PE | 5 | 4 | 1 |
| Configuration Example 53 | OPP-SiOx/PE | 5 | 4 | 1 |

(continued)

| | | Oxygen transmission rate | | |
|---|---|---|---|---|
| | | Example (1-51) to (1-60) | Example (2-51) to (2-60) | Comparative Example (1-51) to (1-60) |
| Configuration Example 54 | OPE-AlOx/CPP | 5 | 4 | 1 |
| Configuration Example 55 | OPE-SiOx/CPP | 5 | 4 | 1 |
| Configuration Example 56 | OPE-AlOx/PE | 5 | 4 | 1 |
| Configuration Example 57 | OPE-SiOx/PE | 5 | 4 | 1 |
| Configuration Example 58 | PET/AlOx-PET(HS) | 4 | 3 | 1 |
| Configuration Example 59 | PET/SiOx-PET(HS) | 4 | 3 | 1 |
| Configuration Example 60 | PET-AlOx/AlOx-PET (HS) | 5 | 3 | 1 |

[Table 8]

| | | Aroma retention properties | | |
|---|---|---|---|---|
| | | Example (1-1) to (1-38) | Example (2-1) to (2-38) | Comparative Example (1-1) to (1-38) |
| Configuration Example 1 | OPP/CPP | B | B | D |
| Configuration Example 2 | OPP/PE | B | B | D |
| Configuration Example 5 | PET/PET(HS) | A | A | A |
| Configuration Example 6 | OPP/Print layer/CPP | B | B | D |
| Configuration Example 7 | OPP/Print layer/PE | B | B | D |
| Configuration Example 9 | OPP/VM-CPP | A | B | D |
| Configuration Example 12 | OPP/VM-OPP/CPP | A | B | D |
| Configuration Example 21 | OPE/VM-PE | B | C | D |
| Configuration Example 31 | PET/VM-PET/PET(HS) | A | A | A |
| Configuration Example 32 | PET/VM-PET/AlOx-PET(HS) | A | A | A |
| Configuration Example 33 | PET/PET-VM/PET(HS) | A | A | A |

(continued)

| | | Aroma retention properties | | |
|---|---|---|---|---|
| | | Example (1-1) to (1-38) | Example (2-1) to (2-38) | Comparative Example (1-1) to (1-38) |
| Configuration Example 34 | PET/PET-VM/AlOx-PET(HS) | A | A | A |
| Configuration Example 35 | OPP/Print layer/VM-CPP | A | B | D |
| Configuration Example 38 | OPP/Print layer/VM-OPP/CPP | A | B | D |

Since a PET film itself has gas barrier properties to some extent, in Configuration Examples 5 and 8, there was not much difference in the gas barrier properties between the Examples and the Comparative Examples; however, in other configurations, the laminated bodies of the invention exhibited excellent gas barrier properties. The laminated bodies of Configuration Examples 1 to 60 are such that the first base material, the second base material, and the third base material are all resins of the same type. That is, it is understood that a gas barrier laminated body having excellent recyclability can be provided by the invention.

Furthermore, since a PET film itself has aroma retention properties to some extent, in Configuration Examples 5 and 31 to 34, all the Examples and Comparative Examples exhibited satisfactory aroma retention properties; however, in other Configuration Examples, the laminated bodies of the invention exhibited excellent aroma retention properties.

## Claims

**1.** A laminated body comprising:

a first base material;
a second base material; and
a gas barrier adhesive layer disposed between the first base material and the second base material,
wherein the second base material has heat-sealing properties, and
the first base material and the second base material are formed from resins of the same type.

**2.** The laminated body according to claim 1,

wherein the laminated body includes a third base material disposed between the first base material and the gas barrier adhesive layer, and
the first base material, the second base material, and the third base material are formed from resins of the same type.

**3.** The laminated body according to claim 1,

wherein the laminated body includes a third base material disposed between the second base material and the gas barrier adhesive layer, and
the first base material, the second base material, and the third base material are formed from resins of the same type.

**4.** A packaging material comprising the laminated body according to any one of claims 1 to 3.

## INTERNATIONAL SEARCH REPORT

International application No.
**PCT/JP2021/040515**

**A. CLASSIFICATION OF SUBJECT MATTER**

***B32B 27/00***(2006.01)i; ***B65D 65/40***(2006.01)i
FI: B32B27/00 B; B65D65/40 D; B65D65/40 A

According to International Patent Classification (IPC) or to both national classification and IPC

**B. FIELDS SEARCHED**

Minimum documentation searched (classification system followed by classification symbols)

B32B1/00-43/00; B65D65/40

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-529935 A (DOW GLOBAL TECHNOLOGIES LLC) 15 October 2020 (2020-10-15) claims 1-23, paragraphs [0027], [0036], fig. 1 | 1-4 |
| X | JP 2019-171861 A (DAINIPPON PRINTING CO LTD) 10 October 2019 (2019-10-10) claims 1-22, paragraphs [0001]-[0007], [0114], [0116], [0133], examples 1-6 | 1-4 |
| Y | claims 1-22, paragraphs [0001]-[0007], [0114], [0116], [0133], examples 1-6 | 2-3 |
| X | JP 2018-171795 A (DAINIPPON PRINTING CO LTD) 08 November 2018 (2018-11-08) claims 1-12, paragraph [0094], examples 1-3 | 1, 4 |
| Y | claims 1-12, paragraph [0094], examples 1-3 | 2-3 |
| X | JP 2018-171796 A (DAINIPPON PRINTING CO LTD) 08 November 2018 (2018-11-08) claims 1-11, paragraph [0064], examples 1-5 | 1, 4 |
| Y | claims 1-11, paragraph [0064], examples 1-5 | 2-3 |
| X | JP 2020-037187 A (DAINIPPON PRINTING CO LTD) 12 March 2020 (2020-03-12) claims 1-8, paragraphs [0003], [0030], examples 1-6 | 1, 4 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 December 2021** | **11 January 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2021/040515**

**C. DOCUMENTS CONSIDERED TO BE RELEVANT**

| Category* | Citation of document, with indication, where appropriate, of the relevant passages | Relevant to claim No. |
|---|---|---|
| A | JP 2020-055176 A (DAINIPPON PRINTING CO LTD) 09 April 2020 (2020-04-09) claims 1-6, paragraph [0004] | 1-4 |
| A | JP 2016-101758 A (DAINIPPON PRINTING CO LTD) 02 June 2016 (2016-06-02) claims 1-4, examples 1-3 | 1-4 |

Form PCT/ISA/210 (second sheet) (January 2015)

**INTERNATIONAL SEARCH REPORT**
**Information on patent family members**

International application No.
**PCT/JP2021/040515**

| Patent document cited in search report | Publication date (day/month/year) | Patent family member(s) | Publication date (day/month/year) |
|---|---|---|---|
| JP 2020-529935 A | 15 October 2020 | US 2020/0238674 A1<br>claims 1-20, paragraphs [0028], [0037], fig. 1<br>WO 2019/027527 A1<br>EP 3661741 A1<br>CN 111051053 A | |
| JP 2019-171861 A | 10 October 2019 | US 2021/0023828 A1<br>claims 1-15, paragraphs [0001]-[0004], [0218], [0223], examples<br>WO 2019/189092 A1<br>EP 3778231 A1 | |
| JP 2018-171795 A | 08 November 2018 | US 2020/0047960 A1<br>claims 1-16, paragraph [0160], examples<br>WO 2018/181900 A1<br>EP 3603955 A1 | |
| JP 2018-171796 A | 08 November 2018 | US 2020/0047960 A1<br>claims 1-16, paragraph [0160], examples<br>WO 2018/181900 A1<br>EP 3603955 A1 | |
| JP 2020-037187 A | 12 March 2020 | (Family: none) | |
| JP 2020-055176 A | 09 April 2020 | (Family: none) | |
| JP 2016-101758 A | 02 June 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014004799 A
- JP 2004238050 A